(19) Europäisches Patentamt / European Patent Office / Office européen des brevets

(11) **EP 3 459 617 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(51) Int Cl.:
**B01D 53/94** *(2006.01)* **B01J 23/63** *(2006.01)*
**F01N 3/08** *(2006.01)* **F01N 3/035** *(2006.01)*
**B01J 35/00** *(2006.01)* **F01N 3/022** *(2006.01)*

(21) Anmeldenummer: **17192505.0**

(22) Anmeldetag: **22.09.2017**

(54) **PARTIKELFILTER MIT INTEGRIERTEN KATALYTISCHEN FUNKTIONEN**

PARTICLE FILTER WITH INTEGRATED CATALYTIC FUNCTIONS

FILTRE À PARTICULES POURVU DE FONCTIONS CATALYTIQUES INTÉGRÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.03.2019 Patentblatt 2019/13**

(73) Patentinhaber: **UMICORE AG & CO. KG**
**63457 Hanau-Wolfgang (DE)**

(72) Erfinder:
• **SCHIFFER, Michael**
  **63450 Hanau (DE)**
• **HOYER, Ruediger**
  **63755 Alzenau-Hoerstein (DE)**
• **WOERZ, Anke**
  **60435 Frankfurt (DE)**

(56) Entgegenhaltungen:
EP-A1- 1 486 248    EP-A1- 2 322 773
EP-A2- 2 641 651    WO-A1-2017/056067
US-A1- 2011 123 421

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Partikelfilter zur Entfernung von Partikeln aus dem Abgas von mager betriebenen Verbrennungsmotoren, der mit katalytischen Funktionen ausgestattet ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden ($NO_x$) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Rußpartikel können sehr effektiv mit Hilfe von Partikelfiltern aus dem Abgas entfernt werden. Besonders bewährt haben sich Wandflussfilter aus keramischen Materialien. Diese sind aus einer Vielzahl von parallelen Kanälen aufgebaut, die durch poröse Wände gebildet werden. Die Kanäle sind wechselseitig an einem der beiden Enden des Filters verschlossen, so dass erste Kanäle gebildet werden, die an der ersten Seite des Filters offen und auf der zweiten Seite des Filters verschlossen sind, sowie zweite Kanäle, die an der ersten Seite des Filters verschlossen und auf der zweiten Seite des Filters offen sind. Das beispielsweise in die ersten Kanäle einströmende Abgas kann den Filter nur über die zweiten Kanäle wieder verlassen und muss zu diesem Zweck durch die porösen Wände zwischen den ersten und zweiten Kanälen durchfließen. Beim Durchtritt des Abgases durch die Wand werden die Partikel zurückgehalten.
Es ist bekannt, dass Partikelfilter mit katalytisch aktiven Beschichtungen versehen werden können. So beschreibt beispielsweise die EP1820561 A1 die Beschichtung eines Dieselpartikelfilters mit einer Katalysatorschicht, die das Abbrennen der gefilterten Rußpartikel erleichtert.
Die US2012/288427 A1 beschreibt einen Partikelfilter, der eine Beschichtung aus zwei Materialzonen umfasst. Dabei umfasst eine erste Materialzone Platin und Palladium in einem Gewichtsverhältnis von 1:0 bis größer als 1:1 und eine zweite Materialzone Platin und Palladium in einem Gewichtsverhältnis von 1:1 bis 0:1.
Die 2011/212008 beschreibt ebenfalls ein Partikelfilter, bei dem eine anströmseitige Zone Platin und eine abströmseitige Zone Palladium umfasst.

Zur Entfernung der Stickoxide sind sogenannte Stickoxid-Speicherkatalysatoren, für die auch der Begriff "Lean NOx Trap" oder "LNT" üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.
Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu $NO_2$, sowie CO und HC zu $CO_2$ zu oxidieren und andererseits während der fetten Betriebsphasen, in denen der Stickoxid-Speicherkatalysator regeneriert wird, freigesetztes $NO_2$ zu Stickstoff zu reduzieren.
Moderne Stickoxid-Speicherkatalysatoren sind beispielsweise in EP0885650 A2, US2009/320457, WO2012/029050 A1 und WO2016/020351 A1 beschrieben.

Es ist bereits bekannt, Rußpartikelfilter und Stickoxid-Speicherkatalysatoren zu kombinieren. So beschreiben beispielsweise die EP1420 149 A2 und die US2008/141661 Systeme aus einem Dieselpartikelfilter und einem abströmseitig angeordneten Stickoxid-Speicherkatalysator.

Darüber hinaus ist bereits in beispielsweise EP1393069 A2, EP1433519 A1, EP2505803 A2 und US2014/322112 vorgeschlagen worden, Partikelfilter mit Stickoxid-Speicherkatalysatoren zu beschichten.
Die US2014/322112 beschreibt eine Zonierung der Beschichtung des Partikelfilters mit Stickoxid-Speicherkatalysator dergestalt, dass sich eine Zone ausgehend vom anströmseitigen Ende des Partikelfilters in den Eingangskanälen und eine andere Zone ausgehend vom abströmseitigen Ende des Partikelfilters in den Ausgangskanälen befindet. Sowohl die Beladung mit Washcoat, als auch die mit Edelmetall ist in der anströmseitigen Zone höher als in der abströmseitigen Zone.

Die in der SAE-Schrift SAE 950809 beschriebene Arbeitsweise, bei der Stickoxide von einem Stickoxid-Speicherkatalysator in einer mageren Betriebsphase des Motors gespeichert und in einer darauf folgenden fetten Betriebsphase wieder freigesetzt werden, wird auch als aktive Stickoxid-Speicherung bezeichnet.

Daneben ist auch ein als passive Stickoxid-Speicherung bekanntes Verfahren beschrieben worden. Dabei werden Stickoxide in einem ersten Temperaturbereich gespeichert und in einem zweiten Temperaturbereich wieder freigesetzt, wobei der zweite Temperaturbereich bei höheren Temperaturen liegt als der erste Temperaturbereich. Zur Durchführung dieses Verfahrens werden passive Stickoxid-Speicherkatalysatoren verwendet, die auch als PNA (für "passive NOx-Adsorber") bezeichnet werden.

Mittels passiver Stickoxid-Speicherkatalysatoren können Stickoxide insbesondere bei Temperaturen unter 200°C, bei denen ein SCR-Katalysator seine Betriebstemperatur noch nicht erreicht hat, gespeichert werden und wieder freigesetzt werden, sobald der SCR-Katalysator betriebsbereit ist. Somit wird durch die Zwischenspeicherung der vom Motor emittierten Stickoxide unterhalb von 200°C, sowie die konzertierte Freisetzung jener Stickoxide oberhalb von 200°C eine gesteigerte Gesamt-Stickoxid-Umsetzung des Abgasnachbehandlungssystems realisiert.

Als passiver Stickoxid-Speicherkatalysator ist auf Ceroxid geträgertes Palladium beschrieben worden, siehe zum Beispiel WO2008/047170 A1 und WO2014/184568 A1, das gemäß WO2012/071421 A2 und WO2012/156883 A1 auch auf einen Partikelfilter beschichtet werden kann.

Aus WO2012/166868 A1 ist bekannt, als passiven Stickoxid-Speicherkatalysator einen Zeolithen zu verwenden, der beispielsweise Palladium und ein weiteres Metall, wie zum Beispiel Eisen, enthält.

Die WO2015/085303 A1 offenbart passive Stickoxid-Speicherkatalysatoren, die ein Edelmetall und ein kleinporiges Molekularsieb mit einer maximalen Ringgröße von acht tetraedrischen Atomen enthalten.

Dokument EP2322773 A1 offenbart, dass die Ausnutzung einer Speicherkomponente durch inhomogene Verteilung in und auf den Wänden eines Partikelfilters verbessert werden kann.

Abgasnachbehandlungssysteme für die Gesetzgebungsstufe Euro 6c und nachfolgende Gesetzgebungen müssen in einem weiten Betriebsbereich hinsichtlich Temperatur, Abgasmassenstrom und Stickoxid-Massenstrom, besonders hinsichtlich Partikelanzahl und Stickoxid-Reduktion effektiv funktionieren. Die bestehenden Euro 6a-Systeme mit einer aktiv-Stickoxid-Speicherkatalysator-/Dieselpartikelfilter-Kombination weisen aber zum Teil zu wenig Stickoxid-Speicherkapazität auf, um bei allen Betriebszuständen effektiv Stickoxid zu reduzieren. Das kann zwar im Prinzip durch ein größeres Volumen des Stickoxid-Speicherkatalysators sichergestellt werden. Oftmals ist aber kein Bauraum für eine Volumenvergrößerung vorhanden.

Es besteht somit weiter Bedarf an technischen Lösungen bzw. Konzepten, die ausreichend Stickoxid-Speicherkapazität zur Verfügung stellen und gleichzeitig mit dem zur Verfügung stehenden Bauraum auskommen.

Es wurde nun gefunden, dass ein in bestimmter Weise mit katalytischen Funktionen ausgestatteter Partikelfilter das geschilderte Problem löst.

Die vorliegende Erfindung betrifft einen Partikelfilter, der ein Wandflussfilter der Länge L und drei voneinander verschiedene Beschichtungen X, Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen $O_E$ bzw. $O_A$ bilden und wobei die Kanäle E am zweiten Ende und die Kanäle A am ersten Ende verschlossen sind, dadurch gekennzeichnet, dass sich Beschichtung X in den porösen Wänden, Beschichtung Y in den Kanälen E auf den Oberflächen $O_E$ und Beschichtung Z in den Kanälen A auf den Oberflächen $O_A$ befindet, wobei Beschichtung X Ceroxid und Platin,

Beschichtung Y Ceroxid und Palladium, sowie

Beschichtung Z Platin umfasst.

Beschichtung X umfasst in einer Ausgestaltung des erfindungsgemäßen Partikelfilters Palladium. In diesem Fall ist das Verhältnis Platin zu Palladium insbesondere 2 : 1 bis 14 : 1, beispielsweise 4 : 1 bis 10 : 1.

In Beschichtung X liegen Platin und sofern vorhanden Palladium auf einem geeigneten Trägermaterial vor. Als Trägermaterial kommen alle dem Fachmann für diesen Zweck geläufigen Materialien in Betracht. Sie weisen eine BET-Oberfläche von 30 bis 250 $m^2$/g, bevorzugt von 100 bis 200 $m^2$/g auf (bestimmt nach DIN 66132) und sind insbesondere Aluminiumoxid, Siliziumoxid, Magnesiumoxid, Titanoxid, sowie Mischungen oder Mischoxide von mindestens zwei dieser Materialien.

Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Als Trägermaterial für das Platin und gegebenenfalls Palladium kann aber auch das Ceroxid dienen. Es ist auch möglich, dass ein Teil des Platins und gegebenenfalls des Palladiums auf Ceroxid vorliegt und der Rest auf einem der oben genannten Trägermaterialien.

Die Beschichtung X enthält üblicherweise Ceroxid in Mengen von 50 bis 150 g/L, insbesondere 60 bis 90 g/L, bezogen auf das Volumen des Wandflussfilters.

In Beschichtung Y liegt Palladium auf Ceroxid geträgert vor. Das Ceroxid liegt in Beschichtung Y üblicherweise in Mengen von 50 bis 150 g/L, insbesondere 60 bis 90 g/L, bezogen auf das Volumen des Wandflussfilters vor.

Außer Ceroxid und Palladium kann Beschichtung Y als weitere Komponente beispielsweise ein Metalloxide ausgewählt aus der Reihe bestehend aus Aluminiumoxid, Siliziumoxid, Magnesiumoxid, Titanoxid und Mischungen oder Mischoxide von mindestens zwei dieser Materialien, enthalten. Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

In Beschichtung Z liegt Platin insbesondere auf einem geeigneten Trägermaterial vor. Als Trägermaterial kommen alle dem Fachmann für diesen Zweck geläufigen Materialien in Betracht. Sie weisen eine BET-Oberfläche von 30 bis 250 $m^2/g$, bevorzugt von 100 bis 200 $m^2/g$ auf (bestimmt nach DIN 66132) und sind insbesondere Aluminiumoxid, Siliziumoxid, Magnesiumoxid, Titanoxid, Ceroxid, sowie Mischungen oder Mischoxide von mindestens zwei dieser Materialien.

Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Die Beschichtung Z umfasst insbesondere kein Ceroxid.

Das in den Beschichtungen X und Y eingesetzte Ceroxid kann handelsüblicher Qualität sein, d.h. einen Ceroxid-Anteil von 90 bis 100 Gew.-% aufweisen. Insbesondere liegt der Ceroxid-Gehalt bei 98 bis 100 Gew.-%. In Ausführungsformen umfasst weder Beschichtung X, noch Beschichtung Y Cer-Zirkon-Mischoxide.

In Ausführungsformen des erfindungsgemäßen Partikelfilters enthalten die Beschichtungen X und Y außer Ceroxid keine Stickoxidspeichermaterialien, insbesondere keine Alkalimetalle und keine Erdalkalimetalle.

In Ausführungsformen des erfindungsgemäßen Partikelfilters enthält die Beschichtungen Z keine Stickoxidspeichermaterialien, insbesondere kein Ceroxid, sowie keine Alkalimetalle und keine Erdalkalimetalle.

Die Kanalwände des Wandflussfilters sind porös und weisen im unbeschichteten Zustand beispielsweise Porositäten von 30 bis 80, insbesondere 50 bis 75% auf. Ihre durchschnittliche Porengröße beträgt im unbeschichteten Zustand beispielsweise 5 bis 30 Mikrometer.

In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Beschichtungen X, Y und Z können auf dem Wandflussfilter in verschiedener Weise angeordnet sein.

In einer Ausführungsform des erfindungsgemäßen Partikelfilters erstrecken sich die Beschichtungen X, Y und Z alle über die gesamte Länge L.

In anderen Ausführungsformen des erfindungsgemäßen Partikelfilters erstrecken sich eine, zwei oder alle drei Beschichtungen X, Y und Z nur über einen Teil der gesamten Länge L, also etwa über 20 bis 80 % der Länge L, in der Regel ausgehend vom ersten oder vom zweiten Ende des Wandflussfilters.

Die Aufbringung der Beschichtungen X, Y und Z auf den Wandflussfilter erfolgt mit Hilfe entsprechender Beschichtungssuspensionen (Washcoat) nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Im Übrigen ist dem Fachmann bekannt, dass die mittlere Teilchengröße der in den Beschichtungssuspensionen zur Herstellung der Beschichtungen X, Y und Z enthaltenen Teilchen so auf die durchschnittliche Porengröße des Wandflussfilterns abgestimmt werden muss, dass die Beschichtung X in der porösen Wand (in-Wand-Beschichtung) und die Beschichtungen Y und Z auf der porösen Wand (auf-Wand-Beschichtung) liegen. Im Fall der Beschichtung X muss die mittlere Teilchengröße klein genug sein, um in die Poren des Wandflussfilters eindringen zu können, während sie im Falle der Beschichtungen Y und Z groß genug sein muss, um nicht in die Poren des Wandflussfilters einzudringen.

Wandflussfilter, die gemäß vorliegender Erfindung verwendet werden können, sind bekannt und am Markt erhältlich. Sie bestehen beispielsweise aus Silicium-Carbid, Aluminium-Titanat oder Cordierit.

Der erfindungsgemäße Partikelfilter eignet sich in hervorragender Weise zur Reinigung von Abgasen von Kraftfahrzeugen, die mit mager betriebenen Motoren, etwa Dieselmotoren, betrieben werden.

Die vorliegende Erfindung betrifft somit auch ein Verfahren zur Reinigung von Abgasen von Kraftfahrzeugen, die mit mager betriebenen Motoren, etwa Dieselmotoren, betrieben werden, das dadurch gekennzeichnet ist, dass das Abgas über einen erfindungsgemäßen Partikelfilter geleitet wird.

Der erfindungsgemäße Partikelfilter wird bevorzugt mit weiteren katalytisch aktiven Katalysatoren zu einem Abgasreinigungssystem kombiniert. Als weitere Katalysatoren kommen insbesondere Stickoxid-Speicherkatalysatoren in Frage, die passive oder aktive Stickoxid-Speicherkatalysatoren sein können.

Beispielsweise wird der erfindungsgemäße Partikelfilter mit einem aktiven Stickoxid-Speicherkatalysator zu einem Abgasreinigungssystem kombiniert.

In einer Ausführungsform ist der aktive Stickoxid-Speicherkatalysator ein Tragkörper A mit einer Länge $L_A$, der als Durchflusssubstrat ausgeführt ist, und der die Beschichtungen A1 und A2 umfasst, wobei die Beschichtung A1 Ceroxid, eine Erdalkaliverbindung und/oder eine Alkaliverbindung, sowie Platin und/oder Palladium enthält und die Beschichtung A2 Ceroxid, sowie Platin und/oder Palladium enthält und frei von Erdalkali- und Alkaliverbindungen ist.

Das Verhältnis Platin zu Palladium kann in den Beschichtungen A1 und A2 gleich oder verschieden sein und beträgt beispielsweise 4:1 bis 18:1 oder 6:1 bis 16:1, beispielsweise 8:1, 10:1, 12:1 oder 14:1.

Die Beschichtungen A1 und A2 können unabhängig voneinander als weiteres Edelmetall Rhodium enthalten. Rhodium liegt in diesen Fällen insbesondere in Mengen von 0,1 bis 10 g/ft$^3$ (entspricht 0,003 bis 0,35 g/l), bezogen auf das Volumen des Tragkörpers A vor.

Üblicherweise liegen in den Beschichtungen A1 und A2 die Edelmetalle Platin und Palladium und gegebenenfalls Rhodium auf geeigneten Trägermaterialien vor. Als Trägermaterialien kommen alle dem Fachmann für diesen Zweck geläufigen Materialien in Betracht. Solche Materialien weisen eine BET-Oberfläche von 30 bis 250 m$^2$/g, bevorzugt von 100 bis 200 m$^2$/g auf (bestimmt nach DIN 66132) und sind insbesondere Aluminiumoxid, Siliziumoxid, Magnesiumoxid, Titanoxid, Ceroxid, sowie Mischungen oder Mischoxide von mindestens zwei dieser Materialien. Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Es ist bevorzugt, wenn die Edelmetalle Platin, Palladium bzw. Rhodium lediglich auf einem oder mehreren der oben genannten Trägermaterialien geträgert sind und somit nicht mit allen Bestandteilen der jeweiligen Materialzone in enger Berührung stehen.

Als Erdalkaliverbindung umfasst Materialzone A1 insbesondere Oxide, Carbonate und/oder Hydroxide von Magnesium, Strontium und/oder Barium, besonders Magnesiumoxid, Bariumoxid und/oder Strontiumoxid. Als Alkaliverbindung umfasst Materialzone A1 insbesondere Oxide, Carbonate und/oder Hydroxide von Lithium, Kalium und/oder Natrium.

Bevorzugt liegt die Erdalkali- bzw. Alkaliverbindung in Mengen von 10 bis 50 g/l, besonders 15 bis 20 g/l, berechnet als Erdalkali- bzw. Alkalioxid, bezogen auf das Volumen des Tragkörpers A, vor.

Die Beschichtungen A1 und A2 liegen auf Tragkörper A insbesondere in Mengen von bis zu 240 g/l, beispielsweise 100 bis 240 g/l, gerechnet als Summe der Materialzonen A1 und A2 und bezogen auf das Volumen des Tragkörpers A, vor.

Das in den Materialzonen A1 und A2 eingesetzte Ceroxid kann handelsüblicher Qualität sein, d.h. einen Ceroxid-Anteil von 90 bis 100 Gew.-% aufweisen.

In einer Ausführungsform beträgt das Verhältnis von Ceroxid in Beschichtung A2 zu Ceroxid in Beschichtung A1, gerechnet jeweils in g/l und bezogen auf das Volumen des Tragkörpers A, 1:2 bis 3:1. Dabei beträgt die Summe von Ceroxid in Beschichtung A1 und Beschichtung A2, gerechnet in g/l und bezogen auf das Volumen des Tragkörpers A, insbesondere 100 bis 240 g/l.

In einer anderen Ausführungsform umfasst Beschichtung A1 Ceroxid in einer Menge von 110 bis 180 g/l bezogen auf das Volumen des Tragkörpers A, wobei

- das Verhältnis von Ceroxid in Beschichtung A1 zu Ceroxid in Beschichtung A2, gerechnet jeweils in g/l, bezogen auf das Volumen des Tragkörpers A, 1:1 bis 5:1 beträgt,
- die Summe von Ceroxid in Beschichtung A1 und Beschichtung A2, gerechnet in g/l und bezogen auf das Volumen des Tragkörpers A, 132 bis 240 g/l beträgt,
- das Verhältnis Pt:Pd gerechnet jeweils in g/l, bezogen auf das Volumen des Tragkörpers A, in Beschichtung A1 und Beschichtung A2 gleich ist und 2:1 bis 20:1 beträgt,
- die Summe von Platin und Palladium, gerechnet jeweils in g/l und bezogen auf das Volumen des Tragkörpers A, in Beschichtung A1 und Beschichtung A2 gleich sind, und
- das Verhältnis der Konzentrationen von Platin und Palladium in Beschichtung A1 zu Platin und Palladium in Beschichtung A2, jeweils bezogen auf die Gesamtmasse der jeweiligen Materialzone, gerechnet jeweils in g/l, bezogen auf das Volumen des Tragkörpers 1, 1:1 bis 1:5 beträgt.

In dieser Ausführungsform wird Ceroxid in Beschichtung A1 bevorzugt in einer Menge von 110 bis 160 g/l, beispielsweise 125 bis 145 g/l, eingesetzt. In Beschichtung A2 wird Ceroxid in Mengen von 22 bis 120 g/l, beispielsweise 40 bis 100 g/l oder 45 bis 65 g/l eingesetzt, jeweils bezogen auf das Volumen des Tragkörpers A.

Die Gesamt-Washcoatbeladung des Tragkörpers A beträgt in dieser Ausführungsform 300 bis 600 g/l, bezogen auf das Volumen des Tragkörpers A. Daraus ergibt sich, dass die Beladung mit Beschichtung A1 150 bis 500 g/l und die Beladung mit Beschichtung A2 50 bis 300 g/l, jeweils bezogen auf das Volumen des ersten Tragkörpers A, beträgt.

Alternativ beträgt die Beladung mit Beschichtung A1 250 bis 300g/l, und mit Beschichtung A2 50 bis 150 g/l, jeweils bezogen auf das Volumen des Tragkörpers A.

In einer weiteren Ausführungsform liegt Beschichtung A2 in einer Menge von 50 bis 200g/l , bezogen auf das Volumen des Tragkörpers A, vor und der Mindest-Massenanteil in % von Ceroxid in Beschichtung A2 errechnet sich aus der Formel

$$0,1 \times \text{Menge der Beschichtung A2 in g/l} + 30.$$

Die Beschichtung A1 und A2 können auf Tragkörper A in verschiedenen Weisen angeordnet sein.

So kann Beschichtung A1 direkt auf Tragkörper A, insbesondere über dessen gesamte Länge $L_A$ angeordnet sein, während Beschichtung A2 auf Beschichtung A1 liegt, insbesondere ebenfalls über die gesamte Länge $L_A$.

Es können sich aber auch Beschichtung A1 ausgehend von einem Ende des Tragkörpers A auf 10 bis 80% seiner Länge $L_A$ und Beschichtung A2 ausgehend vom anderen Ende des Tragkörpers A auf 10 bis 80% seine Länge $L_A$ erstrecken.

Es kann in diesem Fall sein, dass $L_A = L_{A1} + L_{A2}$ gilt, wobei $L_{A1}$ die Länge der Beschichtung A1 und $L_{A2}$ die Länge der Beschichtung A2 ist. Es kann aber auch $L_A < L_{A1} + L_{A2}$ gelten. In diesem Fall überlappen sich die Beschichtungen A1 und A2. Schließlich kann auch $L_A > L_{A1} + L_{A2}$ gelten, wenn ein Teil des ersten Tragkörpers frei von Beschichtungen A1 und A2 bleibt. Im letztgenannten Fall bleibt zwischen den Beschichtungen A1 und A2 ein Spalt, der mindestens 0,5 cm lang ist, also beispielsweise 0,5 bis 1 cm.

Der erfindungsgemäße Partikelfilter kann auch mit einem passiven Stickoxid-Speicherkatalysator zu einem Abgasreinigungssystem kombiniert werden.

In einer Ausführungsform ist der passive Stickoxid-Speicherkatalysator ein Tragkörper B mit einer Länge $L_B$, der als Durchflusssubstrat ausgeführt ist, und der die Beschichtungen B1 und B2 umfasst, wobei die Beschichtung B1 Palladium geträgert auf Ceroxid oder auf einem Zeolithen und die Beschichtung B2 Platin geträgert auf einem Trägermaterial enthält.

Beschichtung B1 enthält erfindungsgemäß Palladium geträgert auf Ceroxid oder auf einem Zeolithen.

Das eingesetzte Ceroxid kann handelsüblicher Qualität sein, d.h. einen Ceroxid-Anteil von 90 bis 100 Gew.-% aufweisen. Insbesondere liegt der Ceroxid-Gehalt bei 98 bis 100 Gew.-%.

Die Ceroxid-Menge in Beschichtung B1 beträgt insbesondere 80-120 g/l, bezogen auf das Volumen des Tragkörpers B.

Der eingesetzte Zeolith kann großporig, mittelporig oder kleinporig sein und ist zum Beispiel ß-Zeolith, ZSM-5 oder vom Strukturtyp AEI, AFX, CHA oder LEV.

Die Palladiummenge in Beschichtung B1 beträgt insbesondere 0,1 bis 0,35 g/l, bezogen auf das Volumen des Tragkörpers B.

Beschichtung B1 kann neben Palladium und Ceroxid buw. Zeolith auch weitere Trägermaterialien enthalten zwar insbesondere in Mengen von bis zu 20 g/l, bezogen auf das Volumen des Tragkörpers B.

Geeignete Trägermaterialien sind insbesondere Aluminiumoxid, Siliziumoxid, Magnesiumoxid, Titanoxid, sowie Mischungen oder Mischoxide von mindestens zwei dieser Materialien.

Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Beschichtung B2 enthält erfindungsgemäß Platin geträgert auf einem Trägermaterial.

Dabei beträgt die Platinmenge in Beschichtung B2 insbesondere 0,1 bis 0,35 g/l und die des Trägermaterials 70 bis 100 g/l, jeweils bezogen auf das Volumen des Tragkörpers B.

Als Trägermaterial kommen wie schon in Beschichtung B1 Aluminiumoxid, Siliziumoxid, Magnesiumoxid, Titanoxid, sowie Mischungen oder Mischoxide von mindestens zwei dieser Materialien in Frage, wobei Aluminiumoxid, Magnesium/Aluminium-Mischoxide und Aluminium/Silizium-Mischoxide bevorzugt sind. Sofern Aluminiumoxid verwendet wird, so ist es besonders bevorzugt stabilisiert, beispielsweise mit 1 bis 6 Gew.-%, insbesondere 4 Gew.-%, Lanthanoxid.

Besonders bevorzugt wird in Materialzone B2 Aluminiumoxid verwendet.

Die Beschichtungen B1 und B2 können auf Tragkörper B in verschiedener Weise angeordnet sein.

So können beide Beschichtungen B1 und B2 nur auf einem Teil der Länge $L_B$ des Tragkörpers B vorliegen. Wenn $L_{B1}$ die Länge der Beschichtung B1 und LB2 die Länge der Beschichtung B2 ist gilt insbesondere $L_B = L_{B1} + L_{B2}$ oder $L_B > L_{B1} + L_{B2}$. Im letztgenannten Fall bleibt zwischen den Beschichtung B1 und B2 ein Spalt, der mindestens 0,5 cm lang ist, also beispielsweise 0,5 bis 1 cm.

In einer anderen Ausführungsform erstreckt sich Beschichtung B1 über die gesamte Länge $L_B$ des Tragkörpers B, während sich Beschichtung B2 ebenfalls über die gesamte Länge LB oder nur über einen Teil davon erstreckt.

Die Aufbringung der Beschichtungen A1, A2, B1 und B2 auf Tragkörper A beziehungsweise Tragkörper B erfolgt analog zum oben beschriebenen Verfahren für den erfindungsgemäßen Partikelfilter mit Hilfe entsprechender Beschichtungssuspensionen (Washcoat) nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Durchflusssubstrate, die gemäß vorliegender Erfindung verwendet werden können, sind bekannt und am Markt erhältlich. Sie bestehen beispielsweise aus Silicium-Carbid, Aluminium-Titanat oder Cordierit.

Die erfindungsgemäßen Abgasreinigungssysteme eignen sich in hervorragender Weise zur Reinigung von Abgasen von Kraftfahrzeugen, die mit mager betriebenen Motoren, etwa Dieselmotoren, betrieben werden.

Die vorliegende Erfindung betrifft somit auch ein Verfahren zur Reinigung von Abgasen von Kraftfahrzeugen, die mit mager betriebenen Motoren, etwa Dieselmotoren, betrieben werden, das dadurch gekennzeichnet ist, dass das Abgas über ein erfindungsgemäßes Abgasreinigungssystem geleitet wird.

Dabei wir das Abgas bevorzugt zuerst durch den Stickoxid-Speicherkatalysator und dann durch den erfindungsgemäßen Partikelfilter geleitet.

Beispiel 1

a) Zur Herstellung eines erfindungsgemäßen Partikelfilters wird ein handelsüblicher wabenförmiger Wandflussfilter aus Cordierit (Porosität 50-59%, mittlere Porengröße 12-14 $\mu$m) auf seiner gesamten Länge mit einer Materialzone X beschichtet, die 34,7 g/l Ceroxid und Platin und Palladium im Verhältnis 12:1, geträgert auf 34,3 g/l eines Lanthan-dotierten Aluminiumoxids enthält.

Dazu wird ein entsprechender Washcoat hergestellt und wie üblich beschichtet. Anschließend wird getrocknet und bei 550°C kalziniert. Materialzone X befindet sich in den porösen Wänden des Wandflussfilters (in-Wand-Beschichtung)

b) Der gemäß a) beschichtete Wandflussfilter wird auf seinen Eingangskanälen auf 50% seiner Länge ausgehend von der Eingangsseite mit einer Materialzone Y beschichtet, die Palladium auf 30g/l Ceroxid enthält.

Dazu wird ein entsprechender Washcoat hergestellt und beschichtet. Anschließend wird getrocknet und bei 550°C kalziniert.

Materialzone Y befindet sich auf den porösen Wänden des Wandflussfilters (auf-Wand-Beschichtung).

c) Der gemäß b) beschichtete Wandflussfilter wird auf seinen Eingangskanälen auf 50% seiner Länge ausgehend von der Ausgangsseite mit einer Materialzone Z beschichtet, die Platin geträgert auf 35 g/l Aluminiumoxid enthält.

Dazu wird ein entsprechender Washcoat hergestellt und beschichtet. Anschließend wird getrocknet und bei 550°C kalziniert.

Materialzone Z befindet sich auf den porösen Wänden des Wandflussfilters (auf-Wand-Beschichtung).

**Patentansprüche**

1. Partikelfilter, der ein Wandflussfilter der Länge L und drei voneinander verschiedene Beschichtungen X, Y und Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen $O_E$ bzw. $O_A$ bilden und wobei die Kanäle E am zweiten Ende und die Kanäle A am ersten Ende verschlossen sind, **dadurch gekennzeichnet, dass** sich Beschichtung X in den porösen Wänden, Beschichtung Y in den Kanälen E auf den Oberflächen $O_E$ und Beschichtung Z in den Kanälen A auf den Oberflächen $O_A$ befindet, wobei
Beschichtung X Ceroxid und Platin,
Beschichtung Y Ceroxid und Palladium, sowie
Beschichtung Z Platin umfasst.

2. Partikelfilter gemäß Anspruch 1, **dadurch gekennzeichnet, dass** Beschichtung X Palladium enthält.

3. Partikelfilter gemäß Anspruch 2, **dadurch gekennzeichnet, dass** das Verhältnis Platin zu Palladium 2 : 1 bis 14 : 1 ist.

4. Partikelfilter gemäß einem oder mehreren der Ansprüche 1 bis 3, **dadurch gekennzeichnet, dass** Beschichtung X Ceroxid in einer Menge von 50 bis 150 g/L, bezogen auf das Volumen des Wandflussfilters, enthält.

5. Partikelfilter gemäß einem oder mehreren der Ansprüche 1 bis 4, **dadurch gekennzeichnet, dass** Beschichtung Y Ceroxid in einer Menge 50 bis 150 g/L, bezogen auf das Volumen des Wandflussfilters, enthält.

**6.** Partikelfilter gemäß einem oder mehreren der Ansprüche 1 bis 5, **dadurch gekennzeichnet, dass** Beschichtung Y ein Metalloxide ausgewählt aus der Reihe bestehend aus Aluminiumoxid, Siliziumoxid, Magnesiumoxid, Titanoxid und Mischungen oder Mischoxide von mindestens zwei dieser Materialien enthält.

**7.** Partikelfilter gemäß einem oder mehreren der Ansprüche 1 bis 6, **dadurch gekennzeichnet, dass** Beschichtung Z kein Ceroxid umfasst.

**8.** Verfahren zur Reinigung von Abgasen von Kraftfahrzeugen, die mit mager betriebenen Motoren betrieben werden, **dadurch gekennzeichnet, dass** das Abgas über einen Partikelfilter gemäß einem oder mehreren der Ansprüche 1 bis 7 geleitet wird.

**9.** Abgasreinigungssystem das einen Partikelfilter gemäß einem oder mehreren der Ansprüche 1 bis 7 und einen weiteren katalytisch aktiven Katalysator umfasst.

**10.** Abgasreinigungssystem gemäß Anspruch 9, **dadurch gekennzeichnet, dass** es als weiteren katalytisch aktiven Katalysator einen Stickoxid-Speicherkatalysator umfasst.

**11.** Abgasreinigungssystem gemäß Anspruch 10, **dadurch gekennzeichnet, dass** es einen aktiven Stickoxid-Speicherkatalysator aus einem Tragkörper A mit einer Länge $L_A$, der als Durchflusssubstrat ausgeführt ist, und Beschichtungen A1 und A2 umfasst, wobei die Beschichtung A1 Ceroxid, eine Erdalkaliverbindung und/oder eine Alkaliverbindung, sowie Platin und/oder Palladium enthält und die Beschichtung A2 Ceroxid, sowie Platin und/oder Palladium enthält und frei von Erdalkali- und Alkaliverbindungen ist.

**12.** Abgasreinigungssystem gemäß Anspruch 10, **dadurch gekennzeichnet, dass** es einen passiven Stickoxid-Speicherkatalysator aus einem Tragkörper B mit einer Länge $L_B$, der als Durchflusssubstrat ausgeführt ist, und Beschichtungen B1 und B2 umfasst, wobei die Beschichtung B1 Palladium geträgert auf Ceroxid oder einem Zeolithen und die Beschichtung B2 Platin geträgert auf einem Trägermaterial enthält.

## Claims

**1.** Particulate filter comprising a wall flow filter of length L and three different coatings X, Y, and Z, wherein the wall flow filter comprises channels E and A that extend in parallel between a first and a second end of the wall flow filter and are separated by porous walls forming surfaces $O_E$ or $O_A$, respectively, and wherein the channels E are sealed at the second end and the channels A are sealed at the first end, **characterized in that** coating X is located in the porous walls, coating Y is located in the channels E on the surfaces $O_E$, and coating Z is located in the channels A on the surfaces $O_A$, wherein
coating X comprises cerium oxide and platinum,
coating Y comprises cerium oxide and palladium, and
coating Z comprises platinum.

**2.** Particulate filter according to claim 1, **characterized in that** coating X contains palladium.

**3.** Particulate filter according to claim 2, **characterized in that** the ratio of platinum to palladium is 2 : 1 to 14 : 1.

**4.** Particulate filter according to one or more of claims 1 through 3, **characterized in that** coating X comprises cerium oxide in an amount of 50 to 150 g/L relative to the volume of the wall flow filter.

**5.** Particulate filter according to one or more of claims 1 through 4, **characterized in that** coating Y comprises cerium oxide in an amount of 50 to 150 g/L relative to the volume of the wall flow filter.

**6.** Particulate filter according to one or more of claims 1 through 5, **characterized in that** coating Y comprises a metal oxides selected from the group consisting of aluminum oxide, silicon oxide, magnesium oxide, titanium oxide, and mixtures or mixed oxides of at least two of these materials.

**7.** Particulate filter according to one or more of claims 1 through 6, **characterized in that** coating Z does not comprise cerium oxide.

8. Method for purifying the exhaust gases of motor vehicles operated with lean-burning engines, **characterized in that** the exhaust gas is passed across a particulate filter according to one or more of claims 1 to 7.

9. Exhaust gas purification system comprising a particulate filter according to one or more of claims 1 through 7 and a further catalytically active catalyst.

10. Exhaust gas purification system according to claim 9, **characterized in that** it comprises a nitrogen oxide storage catalyst as a further catalytically active catalyst.

11. Exhaust gas purification system according to claim 10, **characterized in that** it comprises an active nitrogen oxide storage catalyst composed of a carrier body A having a length $L_A$, which is designed as a flow-through substrate, and coatings A1 and A2, wherein coating A1 contains cerium oxide, an alkaline earth compound and/or an alkali compound, as well as platinum and/or palladium, and coating A2 contains cerium oxide as well as platinum and/or palladium and is free of alkaline earth and alkali compounds.

12. Exhaust gas purification system according to claim 10, **characterized in that** it comprises a passive nitrogen oxide storage catalyst composed of a carrier body B having a length $L_B$, which is designed as a flow-through substrate, and coatings B1 and B2, wherein coating B1 contains palladium borne on cerium oxide or on a zeolite, and coating B2 comprises platinum borne on a carrier material.

**Revendications**

1. Filtre à particules qui comprend un filtre à parois filtrantes de longueur L et trois revêtements X, Y et Z différents les uns des autres, le filtre à parois filtrantes comprenant des canaux E et A qui s'étendent parallèlement entre une première et une seconde extrémité du filtre à parois filtrantes et qui sont séparés par des parois poreuses, qui forment des surfaces $O_E$ ou $O_A$ et les canaux E étant fermés au niveau de la seconde extrémité et les canaux A étant fermés au niveau de la première extrémité, **caractérisé en ce que** le revêtement X est situé dans les parois poreuses, le revêtement Y est situé dans les canaux E sur les surfaces $O_E$ et le revêtement Z est situé dans les canaux A sur les surfaces $O_A$,
le revêtement X contenant de l'oxyde de cérium et du platine,
le revêtement Y contenant de l'oxyde de cérium et du palladium et
le revêtement Z contenant du platine.

2. Filtre à particules selon la revendication 1, **caractérisé en ce que** le revêtement X contient du palladium.

3. Filtre à particules selon la revendication 2, **caractérisé en ce que** le rapport du platine au palladium est de 2 : 1 à 14 : 1.

4. Filtre à particules selon l'une ou plusieurs des revendications 1 à 3, **caractérisé en ce que** le revêtement X contient de l'oxyde de cérium en une quantité de 50 à 150 g/L, par rapport au volume du filtre à parois filtrantes.

5. Filtre à particules selon l'une ou plusieurs des revendications 1 à 4, **caractérisé en ce que** le revêtement Y contient de l'oxyde de cérium en une quantité de 50 à 150 g/L, par rapport au volume du filtre à parois filtrantes.

6. Filtre à particules selon l'une ou plusieurs des revendications 1 à 5, **caractérisé en ce que** le revêtement Y contient un oxyde métallique choisi parmi la série constituée par l'oxyde d'aluminium, l'oxyde de silicium, l'oxyde de magnésium, l'oxyde de titane et les mélanges ou les oxydes mixtes d'au moins deux de ces matières.

7. Filtre à particules selon l'une ou plusieurs des revendications 1 à 6, **caractérisé en ce que** le revêtement Z ne contient pas d'oxyde de cérium.

8. Procédé de purification de gaz d'échappement de véhicules automobiles qui fonctionnent avec des moteurs à mélange pauvre, **caractérisé en ce que** le gaz d'échappement est guidé à travers un filtre à particules selon l'une ou plusieurs des revendications 1 à 7.

9. Système de purification de gaz d'échappement qui contient un filtre à particules selon l'une ou plusieurs des revendications 1 à 7 et un catalyseur catalytiquement actif supplémentaire.

**10.** Système de purification de gaz d'échappement selon la revendication 9, **caractérisé en ce qu'il** comprend comme catalyseur catalytiquement actif supplémentaire un catalyseur accumulateur d'oxydes d'azote.

**11.** Système de purification de gaz d'échappement selon la revendication 10, **caractérisé en ce qu'il** contient un catalyseur actif accumulateur d'oxydes d'azote constitué d'un corps de support A d'une longueur $L_A$, qui est conçu comme un substrat à flux traversant et contient les revêtements A1 et A2, le revêtement A1 contenant de l'oxyde de cérium, un composé alcalino-terreux et/ou un composé alcalin, ainsi que du platine et/ou du palladium et le revêtement A2 contenant de l'oxyde de cérium ainsi que du platine et/ou du palladium et ne contenant pas de composés alcalino-terreux ni de composés alcalins.

**12.** Système de purification de gaz d'échappement selon la revendication 10, **caractérisé en ce qu'il** contient un catalyseur passif accumulateur d'oxydes d'azote constitué d'un corps de support B d'une longueur $L_B$, qui est conçu comme un substrat à flux traversant, et contient des revêtements B1 et B2, le revêtement B1 contenant du palladium supporté sur de l'oxyde de cérium ou sur une zéolithe et le revêtement B2 contenant du platine supporté sur un matériau de support.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1820561 A1
- US 2012288427 A1
- WO 2011212008 A
- EP 0885650 A2
- US 2009320457 A
- WO 2012029050 A1
- WO 2016020351 A1
- EP 1420149 A2
- US 2008141661 A
- EP 1393069 A2
- EP 1433519 A1
- EP 2505803 A2
- US 2014322112 A
- WO 2008047170 A1
- WO 2014184568 A1
- WO 2012071421 A2
- WO 2012156883 A1
- WO 2012166868 A1
- WO 2015085303 A1
- EP 2322773 A1